Europäisches Patentamt

European Patent Office

Office européen des brevets

(11) Numéro de publication : **0 469 989 A1**

# (12) DEMANDE DE BREVET EUROPEEN

(21) Numéro de dépôt : **91402130.8**

(22) Date de dépôt : **30.07.91**

(51) Int. Cl.$^5$ : **H04N 7/167**

(30) Priorité : **03.08.90 FR 9009969**

(43) Date de publication de la demande :
**05.02.92 Bulletin 92/06**

(84) Etats contractants désignés :
**DE DK ES FR GB SE**

(71) Demandeur : **LABORATOIRE EUROPEEN DE RECHERCHES ELECTRONIQUES AVANCEES, SOCIETE EN NOM COLLECTIF**
**9, Place des Vosges La Défense 5**
**F-92400 Courbevoie (FR)**

(72) Inventeur : **Leduc, Michel**
**THOMSON-CSF, SCPI, Cédex 67**
**F-92045 Paris la Défense (FR)**

(74) Mandataire : **Chaverneff, Vladimir et al**
**THOMSON-CSF SCPI**
**F-92045 PARIS LA DEFENSE CEDEX 67 (FR)**

(54) **Procédé de protection contre le désembrouillage non autorisé d'émissions de télévision embrouillées et dispositif de mise en oeuvre.**

(57) Le procédé de protection de l'invention consiste à introduire des leurres (L1, L2) qui sont la reproduction de la séquence interpolée correspondant, dans la ligne embrouillée, à la fin du premier tronçon et au début du deuxième tronçon (Z').

FIG.2

EP 0 469 989 A1

La présente invention se rapporte à un procédé de protection contre le désembrouillage non autorisé d'émissions de télévision embrouillées ainsi qu'à un dispositif de mise en oeuvre d'un tel procédé.

Le désembrouillage non autorisé d'émissions de télévision à péage, couramment appelé piraterie, se fait soit à partir d'une crypto-analyse des données transmises afin de pouvoir récupérer les informations permettant de désembrouiller l'image ou encore de créer des autorisations non réellement transmises, soit par l'analyse physique du signal vidéo qui va permettre de reconstruire la structure originelle de l'image en s'aidant de son contenu et en s'appuyant sur la connaissance des particularités du système d'embrouillage.

Dans les systèmes dits de première génération, un traitement simple du signal vidéo a souvent permis de désembrouiller l'image (système "discret 1", inversion vidéo, suppression des signaux de synchronisation). Dans le cas d'un système dit de deuxième génération, tel que ceux employant l'inversion de ligne à au moins un point de coupure ("line cut and rotate"), on sait que la principale attaque connue réside en l'établissement d'une corrélation horizontale afin de déterminer la position du point de coupure. La corrélation verticale ne peut permettre à elle seule de rétablir la structure de l'image, et de toute façon requiert des moyens de calcul et de stockage très puissants et rapides, et donc onéreux.

Par conséquent, pour obtenir un décodeur pirate à un prix compétitif, il semble évident que les attaques les plus fréquentes se fassent au niveau de la détection du point de coupure, soit directement par analyse logique, soit par corrélation horizontale, soit enfin selon ces deux méthodes.

La présente invention a pour objet un procédé d'embrouillage permettant de rendre très difficile la détection du point de coupure d'au moins une partie des lignes d'un signal vidéo de système de télévision à péage, et ce, sans apporter pratiquement aucune gêne aux utilisateurs dûment autorisés.

La présente invention a également pour objet un dispositif de mise en oeuvre du procédé de l'invention, dispositif qui soit simple, peu onéreux, et facile à implanter dans un système existant.

Le procédé de protection conforme à l'invention, pour l'embrouillage à permutation ou rotation de ligne autour d'au moins un point de coupure avec, de préférence, interpolation de lissage dans la zone de raccordement de tronçons juxtaposés après rotation autour du point (ou des points) de coupure , est caractérisé par le fait que dans au moins une partie des lignes utiles d'au moins une partie des trames du signal vidéo on substitue à au moins une zone de chacune de ces lignes un leurre imitant la structure de la zone de raccordement correspondante des segments de ligne après permutation. De façon avantageuse, l'insertion des leurres n'est effectuée que lorsque la différence d'amplitude, dans ladite structure, entre l'échantillon de plus grande amplitude et celui de plus faible amplitude , est inférieure à un seuil déterminé. Selon un autre aspect de l'invention, on ne substitue un leurre à au moins une zone d'une ligne que lorsque les amplitudes du début et de la fin de cette zone sont sensiblement les mêmes que celles du début et de la fin du leurre.

Le dispositif conforme à l'invention comporte, dans l'émetteur, un circuit de mémorisation synchronisé par le générateur pseudo-aléatoire d'embrouillage et mémorisant la séquence d'échantillons interpolés autour de chaque point de coupure, un circuit à seuil déterminant la différence d'amplitude entre les échantillons du début et ceux de la fin de ladite séquence, un circuit d'insertion d'échantillons relié au circuit de mémorisation, au circuit à seuil, et à un générateur pseudo-aléatoire.

La présente invention sera mieux comprise à la lecture de la description détaillée d'un mode de réalisation, pris à titre d'exemple non limitatif et illustré par le dessin annexé sur lequel:

– la figure 1 est un chronogramme d'une ligne de signal vidéo, avant et après embrouillage, dans laquelle le procédé de l'invention n'introduit pas de leurre,

– la figure 2 est un chronogramme d'une ligne de signal vidéo, avant et après embrouillage, dans laquelle le procédé de l'invention introduit des leurres, et

– la figure 3 est un bloc-diagramme d'un dispositif d'introduction de leurres conformes à l'invention,

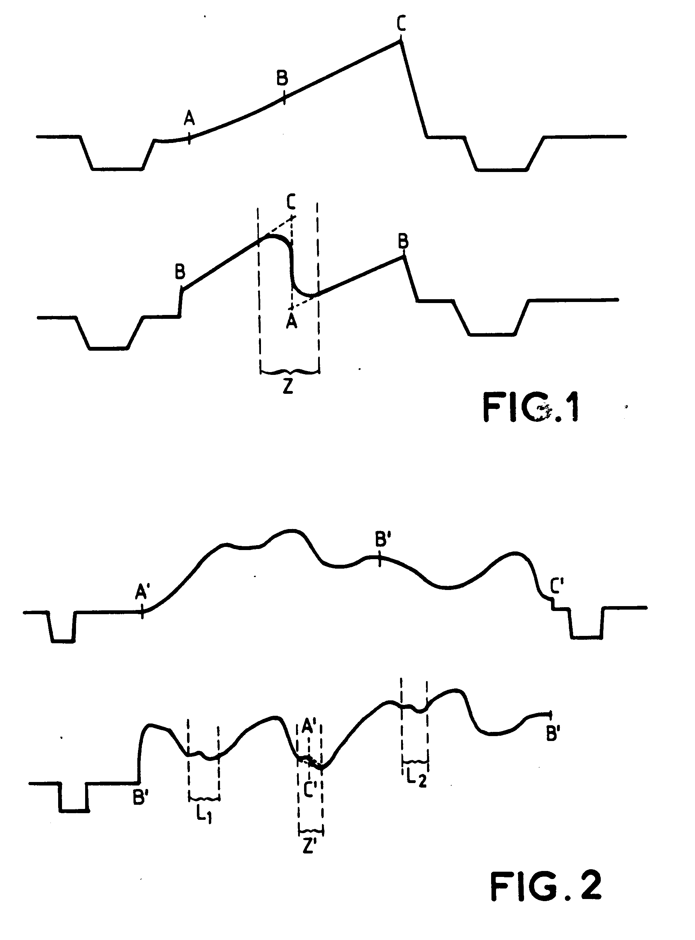

Le procédé de l'invention s'applique à un système de télévision à péage dans lequel l'embrouillage est réalisé par inversion de ligne autour d'un point de coupure déterminé par un générateur pseudo-aléatoire. Pour éviter des distorsions produites par des transitions trop brutales dans la zone de raccordement entre les extrémités de segments raccordées après rotation, on lisse par interpolation l'amplitude des échantillons dans la zone se trouvant autour du point de raccordement des portions de ligne après inversion, comme représenté en figure 1, et ainsi que décrit par exemple dans la demande de brevet français 88 17093 déposée le 23.12.1988.

Pour cette figure 1, on a choisi le cas le plus défavorable, pour lequel la partie visible à l'écran de la ligne vidéo a l'allure d'une rampe montante du point A au point C. L'émetteur comporte un générateur de séquences pseudo-aléatoires qui détermine un point de coupure B. Ce point B peut être situé en un endroit quelconque de la ligne, entre A et C.

L'embrouillage est réalisé par inversion mutuelle des positions des portions de ligne AB et BC. Ainsi, après embrouillage, la partie visualisée de la ligne vidéo comporte, dans l'ordre, les portions BC et AB. Sur la figure 1, on a représenté en traits interrompus la fin du segment BC et le début du segment AB, car, comme on le voit facilement sur cette figure, la différence d'amplitudes entre les points A et C est très élevée. Afin d'assurer une transition moins brutale entre ces segments BC et AB, on lisse par interpolation, dans la zone Z de raccordement des portions BC et AB, l'amplitude des échantillons de la fin du segment BC et du début du segment AB, comme représenté en trait non interrompu sur cette figure 1. Dans un tel cas, l'invention prévoit de ne pas introduire de leurre (reproduction de la zone Z) dans l'un des segments BC ou AB, car, bien qu'un tel leurre puisse être efficace pour éviter le repérage de la vraie zone Z, il risquerait de perturber trop fortement l'image obtenue sur le récepteur d'un abonné dûment autorisé.

On a représenté en figure 2 une ligne vidéo dont les extrémités de la partie utile sont référencées A′ et C′. Un générateur de séquences pseudo-aléatoires détermine un point de coupure B′ entre A′ et C′. On constate qu'après inversion mutuelle des segments A′B′ et B′C′ la différence d'amplitudes, dans la zone Z′, entre les points A′ et C′ est relativement faible (voir diagramme du bas de la figure 2), et par conséquent on pourra utiliser comme leurre cette zone Z′. Dans cette zone Z′, on a représenté en trait non interrompu le signal vidéo après lissage.

Comme on le voit d'après la figure 2, on a introduit dans la ligne vidéo embrouillée deux leurres L1 et L2 dont l'allure est identique à celle du segment de la zone Z′. Etant donné que la différence d'amplitudes entre les échantillons d'amplitude maximale et les échantillons d'amplitude minimale de ces leurres est très faible, ces leurres n'apportent pratiquement aucune gêne aux abonnés dûment autorisés. Ceci est d'autant plus vrai que l'invention prévoit de n'introduire des leurres que dans une partie des lignes des trames, et même, il est possible de ne le faire que pour une partie des trames.

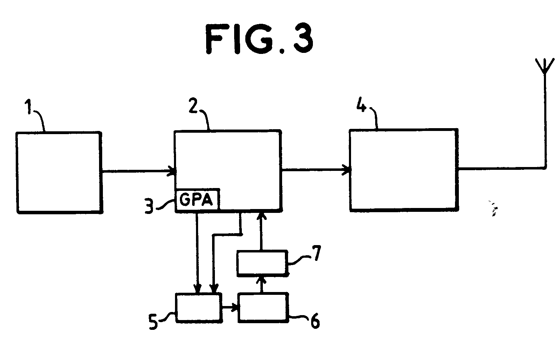

On a représenté en figure 3 le bloc-diagramme simplifié d'un émetteur de télévision à péage permettant la mise en oeuvre du procédé de l'invention. Une source 1 de signaux vidéo/audio numérisés est reliée à un circuit 2 d'embrouillage comprenant un générateur 3 de séquences pseudo-aléatoires. Le circuit 2 est relié à des circuits 4 d'amplification et d'émission.

Le circuit 2 est en outre relié à un circuit 5 de mémorisation de séquences d'échantillons lissés, lui-même relié au générateur 3 déterminant les points de coupure autour desquels se fait le lissage. Ce circuit 5 est relié à un circuit à seuil 6 et à un circuit 7 d'insertion de séquences dans les lignes vidéo. Le circuit 7 est relié au circuit 2 et au circuit 6.

Selon une variante du procédé de l'invention, on mémorise, pour chaque ligne, les amplitudes respectives du premier échantillon et du dernier échantillon de la zone Z, et on cherche dans toute la ligne correspondante une zone ayant la même largeur que la zone Z et dont le premier et le dernier échantillon présentent sensiblement les mêmes amplitudes que ceux de la zone Z. Si c'est le cas, on insère à la place de ces zones les échantillons de la zone Z. Bien entendu, on limite, le cas échéant, le nombre de tels remplacements pour une même ligne à deux ou trois afin de ne pas trop perturber l'image normalement désembrouillée. Il est également bien entendu qu'il est préférable de rechercher à chaque ligne des zones présentant les caractéristiques d'amplitudes de la zone Z correspondante, puisqu'il n'est pas sûr que le cas se présente à chaque ligne. Si toutefois un grand nombre de lignes successives étaient dans ce cas, on peut n'effectuer le remplacement que pour une partie d'entre elles.

Pour simplifier cette variante de l'invention, la détection de zones présentant les mêmes caractéristiques d'amplitudes que la zone Z peut se faire sur la ligne précédant la ligne dans laquelle se fera l'éventuelle substitution. En effet, la zone Z réalise la jonction entre un point du début du segment AB et un point de la fin du segment BC. La probabilité de changement de niveau de ces points d'une ligne à la suivante est faible, et par conséquent on peut judicieusement mettre à profit ce phénomène pour rechercher dans une ligne L une zone similaire à la zone Z de cette ligne L en utilisant en fait la zone Z de la ligne L-1.

## Revendications

1. Procédé de protection contre le désembrouillage non autorisé d'émissions de télévision embrouillées par permutation de ligne autour d'au moins un point de coupure caractérisé par le fait que dans au moins une partie des lignes utiles d'au moins une partie des trames du signal vidéo on substitue à au moins une zone de chacune de ces lignes un leurre (L1, L2) imitant la structure de la zone (Z) de raccordement correspondante des segments de ligne (BC, AB) après permutation.

2. Procédé selon la revendication 1, avec interpolation de lissage autour du point de coupure après permutation, caractérisé par le fait que les leurres imitent la structure interpolée au niveau du point de coupure de la même ligne.

3. Procédé selon l'une des revendications 1 ou 2 caractérisé par le fait que l'on n'insère des leurres que lorsque la différence d'amplitudes, dans la zone de raccordement, après rotation autour du point de coupure, entre les derniers échantillons d'un tronçon de ligne et les premiers échantillons du tronçon de ligne suivant, est inférieure à un seuil déterminé.

4. Procédé selon la revendication 3 caractérisé par le fait que ledit seuil est déterminé de façon à n'apporter pratiquement aucune gêne aux utilisateurs dûment autorisés.

5. Procédé selon la revendication 1, avec interpolation de lissage autour du point de coupure après permutation, caractérisé par le fait que les leurres imitent la structure interpolée au niveau du point de coupure de la ligne précédente.

6. Procédé selon la revendication 1 ou 5, caractérisé par le fait que l'on ne substitue un leurre à au moins une zone d'une ligne que lorsqu'au moins les amplitudes du début et de la fin de cette zone sont sensiblement les mêmes que celles du début et de la fin du leurre.

7. Dispositif de protection contre le désembrouillage non autorisé d'émissions de télévision embrouillées par permutation de lignes autour d'un point de coupure caractérisé par le fait qu'il comporte, dans l'émetteur, un circuit de mémorisation (5) synchronisé par le générateur pseudo-aléatoire d'embrouillage (3) et mémorisant la séquence d'échantillons interpolés autour de chaque point de coupure, un circuit à seuil (6) déterminant la différence d'amplitudes entre les échantillons du début et ceux de la fin de ladite séquence, et un circuit d'insertion d'échantillons (7) relié au circuit de mémorisation, au circuit à seuil, et à un générateur pseudo-aléatoire.

FIG.1

FIG.2

# FIG.3

**Office européen des brevets**

# RAPPORT DE RECHERCHE EUROPEENNE

Numero de la demande

EP 91 40 2130

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 827 510 (WALKER et al.) * En entier * | 1-4,7 | H 04 N 7/167 |
| A | | 5,6 | |
| | --- | | |
| Y | EP-A-0 113 148 (NORTH AMERICAN PHILIPS) * Page 3, lignes 1-22 * | 1-4,7 | |
| A | | 5,6 | |
| | --- | | |
| A | FR-A-2 541 841 (LA RADIOTECHNIQUE) * Résumé * | 1,7 | |
| | --- | | |
| A | EP-A-0 325 509 (TELEDIFFUSION DE FRANCE) * Colonne 1, ligne 1 - colonne 3, ligne 3 * | 1,7 | |
| | ----- | | |

|  |
|---|
| **DOMAINES TECHNIQUES RECHERCHES (Int. Cl.5)** |
| H 04 N |

Le présent rapport a été établi pour toutes les revendications

| Lieu de la recherche | Date d'achèvement de la recherche | Examinateur |
|---|---|---|
| LA HAYE | 04-10-1991 | GREVE M.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)